# EUROPEAN PATENT APPLICATION

(11) **EP 4 769 531 A1**
(43) Date of publication of application: **01.07.2026**
(21) Application number: 25225912.2
(22) Date of filing: 19.12.2025
(51) Int. Cl.: H01M 4/134, H01M 4/1395, H01M 4/36, H01M 4/38, H01M 10/0525

(54) **ANODE FOR SECONDARY BATTERY AND LITHIUM SECONDARY BATTERY INCLUDING THE SAME**

(30) Priority: 27.12.2024 KR 20240199189
(71) Applicant: SK On Co., Ltd., Seoul 03161 (KR)
(72) Inventor: KANG, Chul Ho, 34124 Daejeon (KR); GIL, Na Eun, 34124 Daejeon (KR); LEE, Chan Sub, 34124 Daejeon (KR); HWANG, Chang Mook, 34124 Daejeon (KR)
(74) Representative: Prüfer & Partner mbB Patentanwälte · Rechtsanwälte

(57) **Abstract**

An anode for a secondary battery comprising: an anode current collector; and an anode active material coating comprising: a first anode active material layer disposed on the anode current collector and comprising a first anode active material, and a second anode active material layer disposed on the first anode active material layer and comprising a second anode active material, wherein the first anode active material comprises first silicon-based active material particles, the second anode active material comprises second silicon-based active material particles, wherein the second anode active material layer comprises a silicon-containing active material in a greater amount than the first anode active material layer, wherein a ratio of the content of the first silicon-based active material particles in the total weight of the first anode active material to the sum of the contents of the first silicon-based active material particles in the total weight of the first anode active material and the second silicon-based active material particles in the total weight of the second anode active material is greater than 0 and less than or equal to 0.1 and wherein a mass loading of the second anode active material layer is greater than a mass loading of the first anode active material layer.

## Description

### BACKGROUND

### 1. Field

The present disclosure relates to an anode for a secondary battery and a lithium secondary battery including the anode.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may comprise a lithium secondary battery, a nickelcadmium battery, and a nickel-hydrogen battery. Among these, the lithium secondary battery has been actively developed and applied due to its high operating voltage, high energy density per unit weight, and advantages in charging speed and weight reduction.

For example, the lithium secondary battery may comprise: an electrode assembly comprising a cathode, an anode, and a separation membrane (separator); and an electrolyte that impregnates the electrode assembly. The lithium secondary battery may further comprise, for example, a pouch-type outer case that accommodates the electrode assembly and the electrolyte.

Recently, as the application scope of lithium secondary batteries has expanded, development of lithium secondary batteries having higher capacity and output characteristics has been actively pursued. For example, high-capacity silicon-based active materials and carbon-based active materials may be used together as anode active materials.

However, silicon-based active materials exhibit degradation in cycle life characteristics due to volume expansion and side reactions with the electrolyte. Therefore, there are limitations in achieving high-capacity lithium secondary batteries simply by applying silicon-based active materials.

For example, Korean Patent No. 10-1591698 discloses an anode active material comprising silicon oxide, but it is limited in simultaneously achieving sufficient cycle life and output characteristics.

### SUMMARY

An object of the present disclosure is to provide an anode for a secondary battery having improved electrochemical properties.

Another object of the present disclosure is to provide a lithium secondary battery having improved electrochemical characteristics.

Further, another object of the present disclosure is to provide a method for fabricating an anode for a secondary battery having improved electrochemical characteristics.

An anode for a secondary battery according to exemplary embodiments of the present disclosure comprises: an anode current collector; and an anode active material layer comprising a first anode active material layer disposed on the anode current collector and comprising a first anode active material, and a second anode active material layer disposed on the first anode active material layer and comprising a second anode active material, wherein the first anode active material comprises first silicon-based active material particles, the second anode active material comprises second silicon-based active material particles, wherein the second anode active material layer comprises a silicon-containing active material in a greater amount than the first anode active material layer, wherein a ratio of the content of the first silicon-based active material particles in the total weight of the first anode active material to the sum of the contents of the first silicon-based active material particles in the total weight of the first anode active material and the second silicon-based active material particles in the total weight of the second anode active material is greater than 0 and less than or equal to 0.1 and the mass loading of the second anode active material layer is greater than a mass loading of the first anode active material layer.

In certain embodiments, the first anode active material layer comprises no more than about 25% of a total silicon content of the anode active material coating. For example, in some embodiments, the ratio of the loading amount of the second anode active material layer to the total amount of active material in both layers is 0.8 or more and less than 1.

According to exemplary embodiments, the loading amount of the first anode active material layer may be 2.3 mg/cm² or less.

According to exemplary embodiments, the anode active material coating exhibits a load-versus-depth response of at least about 0.2 N when measured by oblique SAICAS cutting at a horizontal feed of about 5 µm/s and a vertical feed of about 0.5 µm/s. According to exemplary embodiments, the load-versus-depth response is about 0.2 N to about 0.3 N.

According to exemplary embodiments, the fraction of silicon-based particles from the first anode relative to the total silicon-based particles from both the first and second anodes is greater than 0 and less than or equal to about 0.1. In certain embodiments, the content of the first silicon-based active material particles of the first anode relative to the total silicon-based particles from both the first and second anodes is 1 to 10 parts by weight.

In one embodiment, the silicon-containing active material comprises at least one of: silicon, silicon oxide SiOx (wherein 0 < x ≤ 2), silicon-carbon composite, doped silicon, and doped SiOx, where the dopant comprises at least one of B, P, N, Al, Mg, Ca, Zn, Cu, Mn, and Li. In one embodiment, the silicon-containing active material comprises composite particles, wherein the particles comprise a carbonaceous core, a silicon- or silicon-oxide-containing shell, and optionally an amorphous carbon outer layer.

According to exemplary embodiments, the first anode active material layer and the second anode active material layer may further comprise a binder.

According to exemplary embodiments, the first anode active material layer and the second anode active material layer further comprises a binder comprising at least one of polyvinylidene fluoride (PVDF), vinylidene fluoride-hexafluoropropylene copolymer (PVDF-co-HFP), polyacrylonitrile, polymethylmethacrylate, and styrene-butadiene rubber (SBR).

According to exemplary embodiments, the first anode active material layer may have a thickness of about 1 µm to 1 about 0 µm. According to exemplary embodiments, the second anode active material layer may have a thickness of about 50 µm to about 65 µm. In certain embodiments, a ratio of the thickness of the second anode active material layer to the thickness of the first anode active material layer is about 3:1 to about 20:1.

According to exemplary embodiments, a ratio of the density of the first anode active material layer to the density of the second anode active material layer is about 0.5 to about 1.5.

A lithium secondary battery according to exemplary embodiments of the present disclosure may comprise an anode and a cathode disposed opposite the anode.

According to exemplary embodiments, the cathode may comprise a cathode current collector and a cathode active material layer disposed on the cathode current collector, and the cathode active material layer may comprise a cathode active material represented by Formula 1 below.

LiₓNiₐM_{b}O_{2+z} (Formula 1)

In Formula 1, M is Co, Mn, or Al, 0.9 ≤ x ≤ 1.2; 0.5 ≤ a ≤ 0.99; 0.01 ≤ b ≤ 0.5; and -0.5 ≤ z ≤ 0.1. In one embodiment, in Formula 1, a ≤ 0.7, 0.5 ≤ a ≤ 0.7, or 0.5 ≤ a < 0.7.

According to exemplary embodiments, the cathode active material comprises a lithium-nickel metal oxide having a single-particle structure.

In some embodiments, the anode active material coating exhibits a load-versus-depth response of at least about 0.2 N when measured by oblique SAICAS cutting at a horizontal feed of about 5 µm/s and a vertical feed of about 0.5 µm/s.

In some embodiments, the anode active material coating comprises three or more layers that collectively define a through-thickness gradient in silicon-containing active material content that increases with distance from the current collector.

In another aspect, the present disclosure provides a lithium secondary battery comprising the anode as described hereinabove a cathode disposed opposite the anode. According to exemplary embodiments, the lithium secondary battery may operate at a voltage of 4.3 V or more.

In another aspect, the present disclosure provides a method of manufacturing an anode for a lithium secondary battery, the method comprising: applying a first anode slurry to a current collector to form a first anode active material layer; applying a second anode slurry over the first anode active material layer to form a second anode active material layer; drying; and calendering to a target density; wherein the second anode active material layer comprises a silicon-containing active material in a greater amount than the first anode active material layer and has a greater mass loading than the first anode active material layer, wherein a ratio of the content of the first silicon-based active material particles in the total weight of the first anode active material to the sum of the contents of the first silicon-based active material particles in the total weight of the first anode active material and the second silicon-based active material particles in the total weight of the second anode active material is greater than 0 and less than or equal to 0.1.

In certain embodiments, the method may further comprise during drying, subjecting the applied slurries to a magnetic field of about 1,000 to about 15,000 Gauss to influence alignment of at least one of the conductive additive and anisotropic particles. The anode according to exemplary embodiments comprises a second anode active material layer disposed over a first anode active material layer. The loading ratio between the first and second layers, as well as the ratio of first silicon-based particles in the first layer to second silicon-based active material particles in the second layer, are configured to satisfy predetermined relationships, thereby providing a battery having improved fast charge-discharge cycle life.

### BRIEF DESCRIPTION OF THE DRAWINGS

The above and other objects, features and advantages of the present disclosure will be more clearly understood from the following detailed description taken in conjunction with the accompanying drawings, in which:
FIG. 1 is a schematic cross-sectional view of an anode for a lithium secondary battery according to an exemplary embodiment;
FIG. 2 is a schematic plan perspective view illustrating a lithium secondary battery according to an exemplary embodiment;
FIG. 3 is a schematic cross-sectional view illustrating the lithium secondary battery according to an exemplary embodiment;
FIG. 4 is a graph illustrating the electrode discharge-output evaluation results of lithium secondary batteries according to exemplary embodiments and comparative examples;
FIG. 5 is a graph illustrating the fast-charge cycle life characteristic evaluation results of lithium secondary batteries according to exemplary embodiments; and
FIG. 6 is a graph illustrating load data according to the cutting depth of the anode active material layer according to Example 2 and Comparative Example 1.

### DETAILED DESCRIPTION

Described herein is a multilayer anode architecture for lithium secondary batteries designed to improve fast-charging capability, discharge output, and cycle life while maintaining energy density. Materials, structural parameters, fabrication methods (including magnetic alignment), and test data demonstrating performance advantages versus comparative structures are described. The disclosure also provides compatible high-voltage cathodes and complete cell configurations.

Silicon-based anode materials offer high capacity but suffer from volume expansion and side reactions, degrading cycle life and stability, especially under fast charge and high-voltage operation. The instant disclosure provides a two-layer anode on a current collector with a controlled loading ratio and silicon content distribution between layers as one a solution to these issues. The upper layer carries most of the loading, while the lower layer (adjacent to the current collector) contains only a small fraction of silicon-based particles. Tightly specified thickness, density, and composition ranges yield lower resistance, improved mechanical stability, and superior fast-charge cycling.

As used herein, the term "about" refers to a value within 10% of the stated value.

In this specification, the term "lithium secondary battery" may be referred to simply as a "secondary battery."

The anode for a secondary battery according to exemplary embodiments may comprise an anode current collector, and a first anode active material layer and a second anode active material layer that are sequentially disposed on at least one surface of the anode current collector.

According to exemplary embodiments, the anode for a secondary battery may comprise a first anode active material layer and a second anode active material layer sequentially disposed on one surface of the anode current collector. Alternatively, the anode for a secondary battery may comprise a first anode active material layer and a second anode active material layer sequentially disposed on both surfaces of the anode current collector.

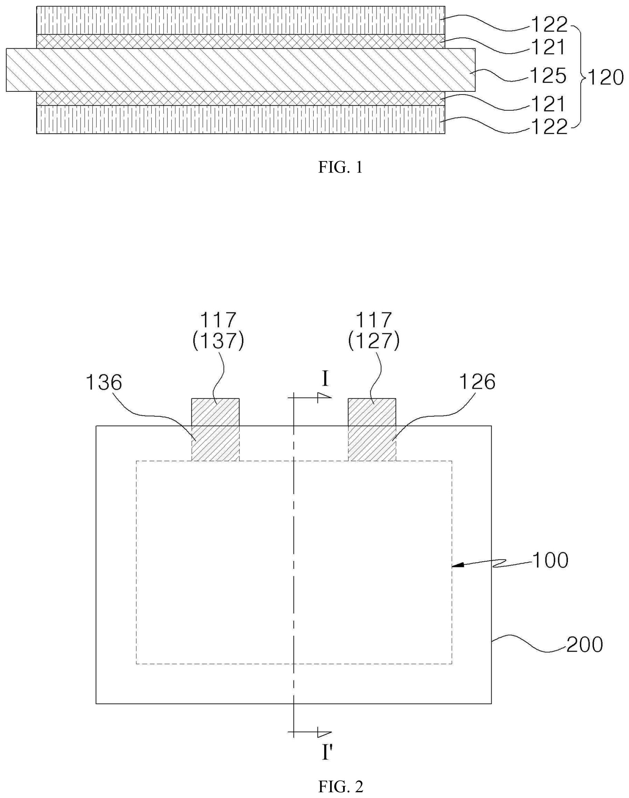

FIG. 1 is a schematic view illustrating a cross-section of an anode for a secondary battery according to an exemplary embodiment.

Referring to FIG. 1, an anode 120 for a secondary battery may comprise a first anode active material layer 121 and a second anode active material layer 122 sequentially disposed on both surfaces of an anode current collector 125. The anode for a lithium secondary battery may have a structure in which the second anode active material layer 122, the first anode active material layer 121, the anode current collector 125, the first anode active material layer 121, and the second anode active material layer 122 are disposed in this order.

In FIG. 1, the first anode active material layer 121 and the second anode active material layer 122 on one surface of the anode current collector 125 may be omitted. The anode for a secondary battery may have a structure in which the second anode active material layer 122, the first anode active material layer 121, and the anode current collector 125 are disposed in this order.

The anode current collector 125 may comprise gold, stainless steel, nickel, aluminum, titanium, copper, or an alloy thereof, and may comprise, for example, copper or a copper alloy.

According to exemplary embodiments, the first anode active material layer 121 may be disposed on the anode current collector and may comprise a first anode active material. The first anode active material may comprise first silicon-based active material particles.

According to exemplary embodiments, the second anode active material layer 122 may be disposed on the first anode active material layer 121 and may comprise a second anode active material. The second anode active material may comprise second silicon-based active material particles. According to exemplary embodiments, a ratio of the loading amount of the second anode active material in the second anode active material layer to the total loading amount of active material in both the first anode active material layer and the second anode active material layer may be about 0.8 or more and less than about 1. Said differently, in exemplary embodiments, the fraction of the second anode active material's loading relative to the combined loading of active material across both the first and second anode active material layers is at least about 0.8 and less than about 1. For example, the fraction of the second anode active material's loading relative to the combined loading of active material across both the first and second anode active material layers may be about 0.81 to about 0.99, about 0.82 to about 0.98, about 0.83 to about 0.97, or about 0.85 to about 0.95.

Accordingly, an anode for a secondary battery as described herein may, in certain embodiments, comprise an anode current collector; and an anode active material coating comprising: (i) a first anode active material layer disposed on the anode current collector and comprising a first anode active material, and a (ii) second anode active material layer disposed on the first anode active material layer and comprising a second anode active material, wherein the first anode active material comprises first silicon-based active material particles, the second anode active material comprises second silicon-based active material particles, wherein the second anode active material layer comprises a silicon-containing active material in a greater amount than the first anode active material layer, wherein a ratio of the content of the first silicon-based active material particles in the total weight of the first anode active material to the sum of the contents of the first silicon-based active material particles in the total weight of the first anode active material and the second silicon-based active material particles in the total weight of the second anode active material is greater than 0 and less than or equal to 0.1 and wherein a mass loading of the second anode active material layer is greater than a mass loading of the first anode active material layer.

The loading amount of the anode active material in the anode active material layer may, in certain embodiments, govern the secondary battery's performance, energy density, and cycle life. When the specified loading amount ratio is satisfied, a secondary battery with the disclosed anode may exhibit increased charging speed and discharge cycle life while maintaining energy density and mechanical stability. Moreover, discharge capacity and capacity retention may be increased while preventing volume expansion of the anode.

According to exemplary embodiments, a ratio of the content of the first silicon-based active material particles in the total weight of the first anode active material to the sum of the contents of the first silicon-based active material particles in the total weight of the first anode active material and the second silicon-based active material particles in the total weight of the second anode active material may be greater than 0 and less than or equal to about 0.1. Said more simply, in some embodiments, the fraction of silicon-based particles in the first anode relative to the total silicon-based particles in both the first and second anodes is greater than 0 and no more than about 0.1. By satisfying this ratio, the capacity characteristics of the battery may be improved, and the fast charge and discharge cycle life characteristics of the battery may be enhanced.

In certain embodiments, the first anode active material layer comprises no more than about 25% of a total silicon content of the anode active material coating.

According to exemplary embodiments, the ratio of the content of the first silicon-based active material particles in the total weight of the first anode active material to the sum of the contents of the first silicon-based active material particles in the total weight of the first anode active material and the second silicon-based active material particles in the total weight of the second anode active material may be about 0.01 to about 0.09, about 0.02 to about 0.08, about 0.03 to about 0.08, or about 0.04 to about 0.06.

According to exemplary embodiments, the loading amount or density of the first silicon-based active material particles in the first anode active material layer may be about 2.3 mg/cm² or less. For example, the loading amount or density of the first silicon-based active material particles in the first anode active material layer may be greater than 0 mg/cm², such as about 0.01 mg/cm² or more. In some embodiments, the loading amount of the first silicon-based active material particles in the first anode active material layer is about 0.1 mg/cm² to about 2 mg/cm² or about 0.5 mg/cm² to about 2 mg/cm².

According to exemplary embodiments, the loading amount of the second silicon-based active material particles in the second anode active material layer may be about 6 mg/cm² to about 11.3 mg/cm². For example, the loading amount of the second silicon-based active material particles in the second anode active material layer may be about 8 mg/cm² to about 10 mg/cm², or about 8.5 mg/cm² to about 9.9 mg/cm².

By meeting the specified loading amount of silicon-based active material in the first and second anode active material layers, the secondary battery can achieve improved fast charge-discharge cycle while preserving electrode energy density and the mechanical stability.

In certain embodiments, the first silicon-based active material particles may be included in the first active anode material layer an amount of about 1 to about 10 parts by weight based on 100 parts by weight of the first anode active material layer. For example, the content of the first silicon-based active material particles may be about 2 to about 9 parts by weight, about 3 to about 8 parts by weight, or about 4 to about 6 parts by weight based on 100 parts by weight of the first anode active material layer.

According to exemplary embodiments, the second silicon-based active material particles may be included in the second anode active material layer an amount of about 90 to about 99 parts by weight based on 100 parts by weight of the second anode active material layer. For example, the content of the second silicon-based active material particles may be about 91 to about 98 parts by weight, about 92 to about 97 parts by weight, or about 94 to about 96 parts by weight based on 100 parts by weight of the second anode active material layer.

When the proportions of the first silicon-based active material particles in the total weight of the first anode active material and the second silicon-based active material particles in the total weight of the second anode active material fall within the foregoing ranges, the battery may exhibit increased capacity characteristics and improved fast charge and discharge cycle life.

In exemplary embodiments, the first silicon-based active material and the second silicon-based active material may each independently comprise, for example, Si, SiOₓ (wherein 0 < x < 2), a silicon-carbon composite (Si/C), a silicon oxide (silicate)-carbon composite (SiO/C), silicon metal (Si-metal), or the like. In some embodiments, the silicon-based active material may comprise a lithium-silicate compound and may comprise a lithium-silicate compound doped with elements such as magnesium or aluminum.

In certain embodiments, the first silicon-based active material and the second silicon-based active material each independently comprise at least one silicon-based material selected from the group consisting of SiOx (wherein 0 < x < 2) and a silicon-carbon composite. In certain embodiments, the first silicon-based active material and the second silicon-based active material each independently comprise SiOx (wherein 0 < x < 2).

In embodiments wherein the first silicon-based active material and/or the second silicon-based active material comprises a silicon-carbon composite, the silicon-carbon composite may comprise a carbon core and a silicon coating formed on the carbon core.

For example, the carbon core may have a porous structure, and the silicon coating may be deposited on the porous carbon by a process, such as chemical vapor deposition (CVD). This increases the accessible larger surface area of the silicon layer, enabling fuller realization of silicon's high-capacity characteristics. In addition, the porous carbon structure can mechanically support and stabilize the silicon coating, thereby suppressing shrinkage and expansion of the silicon-based active material during repeated charge-discharge cycle. As a result, the silicon-based active material can maintain its high-capacity performance while reducing or suppressing mechanical and chemical instability.

In some embodiments, the silicon-carbon composite may further comprise an additional amorphous carbon coating layer, resulting in a carbon core/silicon coating/amorphous carbon coating configuration. The amorphous carbon coating layer limits the silicon coating's exposure to the electrolyte, mitigating side reactions and the associated gas generation during repeated charge-discharge cycles, which, in turn, enhances operational stability of the battery.

According to exemplary embodiments, the first silicon-based active material and the second silicon-based active material may each independently be doped with a metal element. For example, the first silicon-based active material and the second silicon-based active material may each independently comprise SiOₓ (wherein 0 < x < 2) which further comprises at least one dopant metal selected from the group consisting of Mg, Li, N, B, P, Al, Cu, Mn, Ca, and Zn.

According to exemplary embodiments, the first anode active material and the second anode active material may each independently comprise, in addition to the silicon-based active material particles, a carbon-based active material, a metal composite oxide, such as LixFe2O3 (wherein 0 ≤ x ≤ 1), LixWO2 (wherein 0 ≤ x ≤ 1), SnxMe1-xMe'yOz (wherein Me is Mn, Fe, Pb, or Ge, and Me' is Al, B, P, Si, an element of Group 1, 2, or 3 of the periodic table, or a halogen; 0 < x ≤ 1; 1 ≤ y ≤ 3; 1 ≤ z ≤ 8); a lithium metal; a lithium alloy; a tin-based alloy; a metal oxide such as SnO, SnO2, PbO, PbO2,Pb2O3, Pb3O4, Sb2O3, Sb2O4, Sb2O5, GeO, GeO2, Bi2O3, Bi2O4, or Bi2O5; a conductive polymer such as polyacetylene; a Li-Co-Ni-based material; a titanium oxide; or a lithium titanium oxide. These are merely examples, and other materials could also be included.

According to exemplary embodiments, a carbon-based active material may comprise crystalline carbon or amorphous carbon. Non-limiting examples of amorphous carbon that may be used as an active material include hard carbon, coke, mesocarbon microbeads (MCMB), and mesophase pitch-based carbon fibers. Non-limiting examples of crystalline carbon include natural graphite, artificial graphite, graphitized coke, graphitized MCMB, and graphitized mesophase pitch-based carbon fibers (MPCF).

According to exemplary embodiments, crystalline carbon is used as the carbon-based active material. In certain embodiments, the crystalline carbon is a graphite-based active material, such as natural graphite and/or artificial graphite. Natural graphite may provide a higher capacity than artificial graphite, whereas artificial graphite may exhibit higher chemical and physical stability than natural graphite.

In some embodiments, natural graphite or artificial graphite may be used as the graphite-based active material. In some embodiments, a mixture of natural graphite and artificial graphite are used as the graphite-based active material. In this case, the weight ratio of natural graphite to artificial graphite in the mixture may be about 1:9 to about 9:1, about 3:7 to about 7:3, or about 4:6 to about 6:4.

According to exemplary embodiments, the first anode active material layer and the second anode active material layer may each independently further comprise a binder. Non-limiting examples of binders include polyvinylidene fluoride (PVDF), vinylidene fluoride-hexafluoropropylene copolymer (PVDF-co-HFP), polyacrylonitrile, polymethylmethacrylate, styrene-butadiene rubber (SBR), or any combination thereof. In certain embodiments, the binder comprises at least one of polyvinylidene fluoride (PVDF) and styrene-butadiene rubber (SBR).

According to exemplary embodiments, the first anode active material layer and the second anode active material layer may each independently further comprise a conductive material. The term "conductive material" refers to an additive added to increase the conductivity of an electrode in the relevant technical field. For example, the conductive material may comprise carbon-based conductive materials such as carbon black, acetylene black, Ketjen black, graphene, carbon fiber, carbon fluoride, and carbon nanotubes; metal-based conductive materials such as tin, tin oxide, and titanium oxide; perovskite materials such as LaSrCoO₃ and LaSrMnO₃; and organic-based conductive materials such as polyphenylene derivatives.

According to exemplary embodiments, the first anode active material layer and/or the second anode active material layer may further comprise a thickener. The thickener may be compatible with the binder and may be any material commonly used in the relevant technical field without limitation. For example, the thickener may comprise a cellulose-based polymer, and examples of the cellulose-based polymer may comprise carboxymethyl cellulose (CMC) and methyl cellulose (MC). These may be used alone or in combination of two or more thereof.

According to exemplary embodiments, the conductive material of the first anode active material layer and/or the second anode active material layer may further comprise a dispersant ("conductive material dispersant"), which may improve the homogeneity of the silicon-based active material in the anode slurry.

In certain embodiments, the conductive material dispersant is a surfactant, for example, a cationic surfactant, anionic surfactant, nonionic surfactant, amphoteric surfactant, or a mixture thereof. Non-limiting examples of anionic surfactants include carboxylates, sulfonates, sulfuric acid esters, phosphoric acid esters, and the like. Non-limiting examples of cationic surfactants include simple aliphatic amine salts containing primary to tertiary amines, and onium compounds such as quaternary ammonium salts, phosphonium salts, and sulfonium salts. As used herein, an amphoteric surfactant refers to an amphoteric compound having one or more cationic functional groups and one or more anionic functional groups. Amphoteric compounds may be a carboxylic acid type, sulfonic acid type, sulfuric acid ester type, phosphoric acid type, or phosphoric acid ester type, depending on classification by the anionic active group of the hydrophilic group. Alternatively, an amphoteric compound may be a betaine type, imidazoline type, β-alanine type, or amino type, depending on classification by the chemical structure.

For example, the nonionic surfactant may be a surfactant that does not have a group capable of dissociating into ions in an aqueous solution and may have a hydroxyl (-OH) group. For example, the nonionic surfactant may comprise an ether group and/or an ester group.

In some embodiments, the first anode active material layer may have a thickness of about 1 µm to about 20 µm. For example, the thickness of the first anode active material layer may be about 1 µm to about 15 µm, about 1 µm to about 13 µm, about 1 µm to about 10 µm, or about 3 µm to about 10 µm.

In some embodiments, the second anode active material layer may have a thickness of about 30 µm to about 80 µm. For example, the thickness of the second anode active material layer may be about 40 µm to about 70 µm, about 45 µm to about 65 µm, about 50 µm to about 65 µm, or about 50 µm to about 62 µm.

In exemplary embodiments, the ratio of the thickness of the second anode active material layer to the thickness of the first anode active material layer may be about 3:1 to about 20:1. In some embodiments, the ratio of the thickness of the second anode active material layer to the thickness of the first anode active material layer is about 5:1 to about 20:1. When the thickness ratio falls within the foregoing range, the secondary battery may achieve improved fast charge-discharge cycle life of the may while maintaining energy density and electrode mechanical stability.

According to exemplary embodiments, the ratio of the density of the first anode active material layer to the density of the second anode active material layer may be about 0.5 to about 1.5. For example, the ratio of the density of the first anode active material layer to the density of the second anode active material layer may be about 0.9 to about 1.5 or about 0.9 to about 1.1. Within this range, the battery capacity may be enhanced through the first anode active material layer, and the battery stability may be improved through the second anode active material layer.

According to exemplary embodiments, the first anode active material layer may have a density of about 1.5 g/cm3 to about 1.8 g/cm3. For example, the density of the first anode active material layer may be about 1.56 g/cm 3 to about 1.66 g/cm3. Within this range, the reduction in conduction path length of the first anode active material layer to the anode current collector can yield a battery having improved fast charge-discharge cycle life.

As will be recognized by a person skilled in the art, a density ratio between first and second layers of about 0.5 to about 1.5 and a first layer density range of about 1.5 g/cm³ to about 1.8 g/cm³ permits a second layer density range of about 1.4 to about 1.8 g/cm³. In certain exemplary embodiments, the second anode active material layer has a density of about 1.62 g/cm³ to about 1.63 g/cm³. Within these foregoing range, the density of the second anode active material layer. This configuration can reduce the resistance of the second anode active material layer adjacent to the electrolyte and enhance the fast charge performance.

An anode described and prepared according to any embodiment disclosed herein, thus comprises a current collector and a graded anode active material coating disposed on the current collector. The graded anode active material coating has through-thickness gradient with a silicon-containing active material content that increases with distance from the current collector and a through-thickness gradient of mass loading that is greater at a location more distal from the current collector than a location more proximal to the current collector. In certain embodiments, the graded anode active material coating comprises three to five discrete layers collectively defining through-thickness gradient. By preparing an anode with this configuration, an anode comprising the anode active material layer may exhibit superior charge capacity and charge-discharge performance. Accordingly, further provided herein is use of an anode according to any embodiment disclosed herein to reduce internal resistance and improve fast-charge cycle life relative to an anode in which silicon-containing active material is substantially uniformly distributed through an anode thickness.

An anode, described and prepared according to any embodiment disclosed herein may be characterized by a load value, which may be measured by any method known in the art. For example, in certain embodiments, oblique cutting of the anode active material layer from its surface at about 5 µm/s (horizontal) and about 0.5 µm/s (vertical) yields a load value of active material versus cutting depth of about 0.2 N or more, such as 0.21 N or more, 0.23 N or more, 0.24 N or more, and about 0.3 N or less. Accordingly, the load value can be about 0.2 N to about 0.3 N, including ranges such as 0.21 N to 0.29 N, 0.21 N to 0.28 N, 0.23 N to 0.26 N, and 0.24 N to 0.26 N. Reference to the surface of the anode active material layer refers to the surface of the second anode active material layer.

When the load value as a function of cutting depth falls within the foregoing range, an anode comprising the anode active material layer may exhibit superior charge capacity and charge-discharge performance.

In some embodiments, the load value with respect to the cutting depth of the anode active material layer may be measured in situ using a cutting device during the cutting operation. The cutting device may comprise a blade and measure the load value versus depth while cutting but is not particularly limited thereto. For example, a surface and interfacial cutting analysis system (SAICAS) may be used, which includes a blade.

In certain embodiments, the cutting operation as described above may comprise obliquely cutting the anode active material layer. In addition, the cutting device may obliquely cut the current collector. According to exemplary embodiment, the inclination (0) for oblique cutting may be about 2.5 degrees or more, such as about 2.6 degrees or more, about 2.7 degrees or more, about 2.8 degrees or more, about 2.9 degrees or more, or about 3.0 degrees or more. The inclination may also be about 6 degrees or less, such as about 5.9 degrees or less, about 5.8 degrees or less, about 5.7 degrees or less, about 5.6 degrees or less, or about 5.5 degrees or less. The cutting inclination (0) may therefore fall within a range formed by appropriately selecting the foregoing upper and lower limits. When the cutting inclination (0) lies within this range, the measurement of load value as a function of cutting depth is improved.

According to exemplary embodiments, the cutting device may move horizontally and vertically at the same time from the surface of the anode active material layer, while the blade cuts the anode active material layer at the cutting inclination (0) and may perform inclined cutting until a cutting depth (Hc) suitable for measuring a load value according to the cutting depth is reached. The cutting depth (Hc) may refer to a vertical straight-line distance from the surface of the anode active material layer to the position where a distal end of the blade is located. Here, the cutting depth (Hc) may be a predetermined value. That is, the cutting device may obliquely cut the anode active material layer so that the distal end of the blade is located at the predetermined cutting depth (Hc).

According to exemplary embodiments, a cutting depth suitable for measuring a load value as a function of depth may be positioned at about 20% to about 80% or about 30% to about 70% of the total thickness of the anode active material layer as measured from the surface. That is, a value obtained by dividing the cutting depth by the total layer thickness and multiplying by 100 falls within the foregoing range. In certain embodiments, the cutting depth may be about 70 µm to about 80 µm, about 70 µm to about 78 µm, or about 70 µm to about 75 µm.

The anode, described and prepared according to any embodiment disclosed herein may be incorporated into a lithium second battery, the battery further a cathode disposed opposite the anode. By incorporating an anode as described herein, the lithium secondary battery may exhibit reduced cell resistance, improved fast-charging performance, and improved cycle life.

In exemplary embodiments, the lithium secondary battery may operate at a voltage of about 4.3 V or more. For example, the lithium secondary battery may operate at a voltage of about 4.35 V or more. The lithium secondary battery according to the present embodiment may have low electrode resistance and maintain excellent output even when operated at a high voltage of about 4.3 V or more.

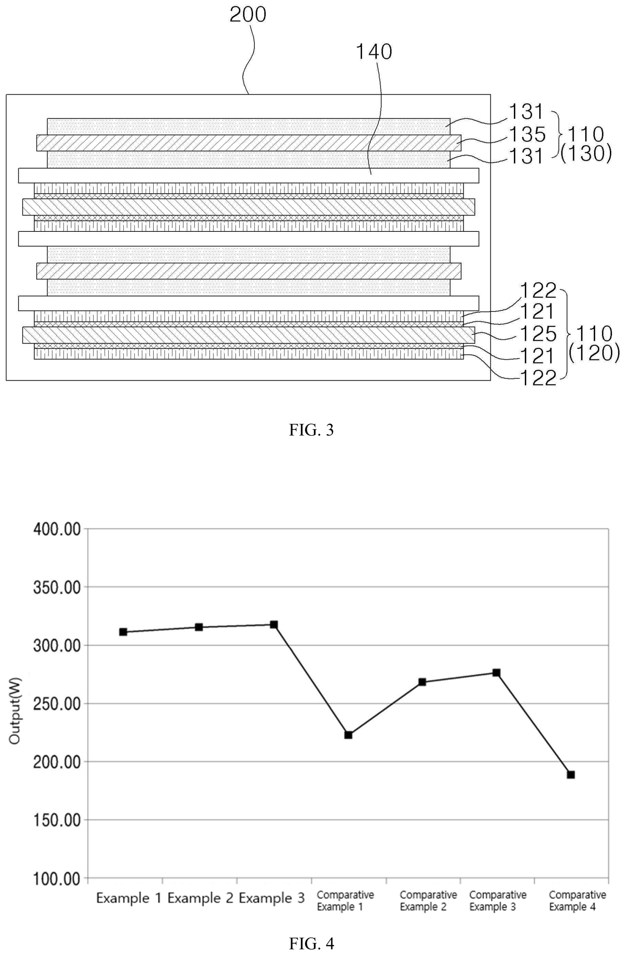

Hereinafter, the lithium secondary battery according to exemplary embodiments will be described in more detail with reference to the drawings. FIGS. 2 and 3 are schematic plan and cross-sectional views illustrating the lithium secondary battery according to exemplary embodiments, respectively. Specifically, FIG. 3 is a cross-sectional view taken along the line I-I' of FIG. 2.

Referring to FIGS. 2 and 3, the lithium secondary battery may comprise an anode 120 and a cathode 130 disposed opposite the anode 120.

According to exemplary embodiments, the anode 120 may be the same as the anode for the lithium secondary battery described above, unless otherwise specified.

FIG. 3 illustrates an example in which the anode for a lithium secondary battery according to some embodiments shown in FIG. 1 (see FIG. 2) is applied. In addition, although not separately illustrated, the lithium secondary battery may comprise the anode for a lithium secondary battery according to the exemplary embodiment shown in FIG. 1.

The cathode 130 may comprise a cathode current collector 135 and a cathode active material layer 131 on the cathode current collector 135.

The cathode active material layer 131 may comprise a cathode active material. The cathode active material may comprise a compound capable of reversibly intercalating and deintercalating lithium ions.

For example, the cathode 130 may be prepared by, for example, mixing and stirring the cathode active material, a cathode binder, and a conductive material in a dispersion medium to prepare a cathode slurry, and then applying the cathode slurry to the cathode current collector 135, followed by drying and roll-pressing.

For example, the cathode current collector 135 may comprise stainless steel, nickel, aluminum, titanium, or an alloy thereof. The cathode current collector 135 may also comprise aluminum or stainless steel having a surface treated with carbon, nickel, titanium, or silver.

According to exemplary embodiments, the cathode active material may comprise a lithium-nickel metal oxide. The lithium-nickel metal oxide may further comprise at least one of cobalt (Co), manganese (Mn) and aluminum (Al).

In some embodiments, the cathode may comprise a cathode current collector and a cathode active material layer disposed on the cathode current collector, and the cathode active material layer may comprise a cathode active material having a layered structure or a crystal structure represented by Formula 1 below:

LiₓNiₐM_{b}O_{2+z} (Formula 1)

In Formula 1, M is Co, Mn, or Al, 0.9 ≤ x ≤ 1.2; 0.5 ≤ a ≤ 0.99; 0.01 ≤ b ≤ 0.5; and -0.5 ≤ z ≤ 0.1. In one embodiment, in Formula 1, a ≤ 0.7, 0.5 ≤ a ≤ 0.7, or 0.5 ≤ a < 0.7.

The structure represented by Formula 1 illustrates the bonding relationship among elements within the layered or crystal framework of the cathode active material and does not exclude the presence of additional elements. For example, M may include Co and/or Mn, which together with Ni, can serve as the principal active elements of the cathode active material. Formula 1 is provided to express the bonding relationship between these main active elements, and should be understood as encompassing introduction and/or substitution of additional elements.

In one embodiment, the cathode active material may further comprise auxiliary elements added to the main active elements to enhance chemical stability or to improve the layered and/or crystal structure. These auxiliary element may be incorporated into the layered/crystal structure with the main active elements to form bonds, and such configurations are also within the scope of the chemical structure represented by Formula 1.

The auxiliary element may comprise, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and Zr. The auxiliary element may contribute to the capacity/output activity of the cathode active material together with Co or Mn, such as Al. In one embodiment, the auxiliary element comprises at least three elements selected from Al, W, Zr, Ti, and Y. In one embodiment, the auxiliary element comprises at least four elements selected from Al, W, Zr, Ti, and Y. For example, the auxiliary element may comprise Al, W, and Zr, and may optionally further comprise Y and Ti. In one embodiment, the auxiliary element comprises Al, W, Zr, and Y.

In one embodiment, the cathode active material layer may comprise a cathode active material or a lithium-nickel metal oxide. The cathode active material or the lithium-nickel metal oxide may comprise a layered structure or a crystal structure represented by Formula 1-1 below.

LiₓNiₐM1_{b1}M2_{b2}O_{2+z} (Formula 1-1)

In Formula 1-1, M1 comprises Co, Mn, and/or Al; M2 comprise the above-described auxiliary elements, 0.9 ≤ x ≤ 1.2; 0.5 ≤ a ≤ 0.99; 0.01 ≤ b1+b2 ≤ 0.4; and -0.5 ≤ z ≤ 0.1. In one embodiment, in Formula 1, a ≤ 0.7, 0.5 ≤ a ≤ 0.7, or 0.5 ≤ a <0.7.

The cathode active material may further comprise a coating element or a doping element. For example, elements which are substantially the same as or similar to the above-described auxiliary elements may be used as a coating element or a doping element, and may be used alone or in combination of two or more thereof.

The coating or doping element may be reside on the surface of the lithium-nickel metal oxide particles, or it may penetrate through the surface of the lithium-nickel metal composite oxide particles and become incorporated into the bonding structure represented by Formula 1 or Formula 1-1. In certain embodiments, the cathode active material comprises a nickel-cobalt-manganese (NCM)-based lithium oxide. In this case, an NCM-based lithium oxide with an increased content of nickel may be used.

Nickel functions as a transition metal that influences output and capacity of a lithium secondary battery. Accordingly, employing a high-nickel (high-Ni) composition in the cathode active material can provide a high-capacity cathode and, by extension, a high-capacity lithium secondary battery. However, as the Ni content increases, the long-term storage stability and cycle life stability of the cathode or the secondary battery may be reduced, and side reactions with the electrolyte may also increase. Nevertheless, according to exemplary embodiments, by including Co while maintaining electrical conductivity, and Mn to improve cycle stability and capacity retention, both properties can be enhanced.

In some embodiments, the content of Ni (e.g., the molar fraction of nickel based on the total molar amount of nickel, cobalt, and manganese) in the NCM-based lithium oxide is about 0.55 or more, or about 0.6 or more. Within this nickel content range, the lithium secondary battery can achieve sufficient capacity. In particular, the battery's fast charge cycle life may be improved. In some embodiments, the content (molar fraction) of Ni in the NCM-based lithium oxide may be about 0.9 or less, such as less than 0.9, 0.88 or less, 0.85 or less, 0.8 or less, 0.75 or less, 0.7 or less, or less than 0.7. In one embodiment, the molar fraction of nickel may be 0.5 or more and less than 0.9. In one embodiment, the molar fraction of nickel may be about 0.5 to about 0.8, such as about 0.55 to about 0.75, about 0.55 to about 0.7, about 0.6 to about 0.8, about 0.6 to about 0.75, or about 0.6 to about 0.7. In some embodiments, the molar fraction of the total elements other than lithium and oxygen in the lithium-nickel metal oxide may be about 0.7 or less. Within the foregoing nickel content range, a lithium secondary battery can secure sufficient capacity while improving discharge output and fast charge performance under high voltage.

In some embodiments, the cathode active material comprises a lithium-nickel metal oxide having a single-particle structure. As used herein, the term "single-particle structure" refers to the exclusion of secondary particles formed by the agglomeration of a plurality of primary particles. For example, in particles having a single-particle structure included in the lithium transition metal oxide, secondary-particle structures in which about 20 or more, about 30 or more, about 40 or more, or about 50 or more primary particles are assembled or agglomerated may be excluded. The term "single-particle structure" does not exclude a single-particle structure in which two or more but fewer than about 20, or 2 to 10 single particles are observed attached to or closely adhered to one another (for example, in a scanning electron microscope (SEM) image). In some embodiments, the lithium-nickel metal oxide may have a structure in which a plurality of primary particles is integrally merged to form a substantially single particle. In certain embodiments, lithium-nickel metal oxide may be in the form of single particles having a granular or spherical shape.

In some embodiments, the cathode active material may comprise a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may comprise, for example, a manganese (Mn)-rich active material, a lithium (Li)-rich layered oxide (LLO)/over-lithiated oxide (OLO)-based active material, or a cobalt (Co)-less active material, which has a chemical structure, or a crystal structure represented by Formula 2 below:

p[Li₂MnO₃]·(1-p)[Li_{q}JO₂] (Formula 2)

In Chemical Formula 2, 0 < p < 1, and 0.9 ≤ q ≤ 1.2, and J comprises at least one element selected from Mn, Ni, Co, Fe, Cr, V, Cu, Zn, Ti, Al, Mg, and B.

In certain embodiments, the cathode active material may comprise about 50% by weight ("wt%") or more, about 60 wt% or more, about 80 wt% or more, about 90 wt% or more, or about 95 wt% or more of the foregoing lithium-nickel metal oxide based on the total weight of the cathode active material layer. In some embodiments, the cathode active material may consist of or consist essentially of the foregoing lithium-nickel metal oxide.

In certain embodiments, the cathode active material layer may further comprise a binder and/or a conductive material, which may be the same as or similar to the anode binder and conductive material described above. For example, the cathode binder may be an organic binder such as polyvinylidene fluoride (PVDF).

Still referring to FIG. 3, a separator 140 may be interposed between the cathode 130 and the anode 120. In some embodiments, the area of the anode 120 may be larger than that of the cathode 130. In this case, lithium ions generated from the cathode 130 may migrate smoothly to the anode 120 without being precipitated during the process.

The separator may be made by any material known in the art. For example, the separator 140 may comprise a porous polymer film, for example a polyolefin polymer. Non-limiting examples of suitable polyolefin polymers include ethylene homopolymer, propylene homopolymer, ethylene/butene copolymer, ethylene/hexene copolymer, or ethylene/methacrylate copolymer. The separator 140 may comprise a nonwoven fabric made of glass fibers having a high melting point, polyethylene terephthalate fibers, or the like.

An electrode cell, which includes the cathode 130, the anode 120 and the separator 140, may be formed. Moreover, a plurality of electrode cells may be stacked to form an electrode assembly 100. An electrode assembly 100 may be formed, for example, by winding, stacking, or z-folding the separator 140.

According to exemplary embodiments, the lithium secondary battery may comprise a separator interposed between the anode and the cathode; and an electrolyte. A non-aqueous electrolyte comprising a lithium salt of an electrolyte and an organic solvent may be used as the electrolyte. Examples of suitable lithium salts include those represented by, for example, Li⁺X⁻, wherein (X⁻) is an anion selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, or an equivalent thereof. Non-limiting examples of suitable organic solvent include propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, γ-butyrolactone, propylene sulfite, tetrahydrofuran, and the like. These may be used alone or in combination of two or more thereof.

The electrode assembly 100 may be housed in the case 200 together with the above-described electrolyte to form a lithium secondary battery. The lithium secondary battery may be manufactured, for example, in a cylindrical, prismatic, pouch, or coin type.

The lithium secondary battery, according to exemplary embodiments, may comprise an electrode lead 117 connected to an electrode 110 and protruding outward from the case 200. For example, the lithium secondary battery may comprise a cathode lead 137 connected to the cathode 130 and protruding outward from the case 200; and an anode lead 127 connected to the anode 120 and protruding outward from the case 200.

The cathode 130 and the cathode lead 137 may be electrically connected. Similarly, the anode 120 and the anode lead 127 may be electrically connected. For example, the cathode lead 137 may be electrically connected to the cathode current collector 135. In addition, the anode lead 127 may be electrically connected to the anode current collector 125.

The cathode current collector 135 of the cathode 130 and the anode current collector 125 of the anode 120 may each comprise a notched part. The notched part may be provided, for example, as an electrode tab. The notched part may comprise a cathode notched part protruding from the cathode current collector 135 and an anode notched part protruding from the anode current collector 125.

For example, the cathode current collector 135 may comprise a protrusion part (cathode tab, 136) on one side. The cathode active material layer 131 may not be formed on the cathode tab 136. The cathode tab 136 may be integrally formed with the cathode current collector 135 or may be connected thereto by welding or the like. The cathode current collector 135 and the cathode lead 137 may be electrically connected through the cathode tab 136.

Similarly, the anode current collector 125 may comprise a protrusion part (anode tab, 126) on one side. The anode active material layer 121 may not be formed on the anode tab 126. The anode tab 126 may be integrally formed with the anode current collector 125 or may be connected thereto by welding or the like. The anode current collector 125 and the anode lead 127 may be electrically connected through the anode tab 126.

In one embodiment, the electrode assembly 100 may comprise a plurality of cathodes and a plurality of anodes. For example, the plurality of cathodes and the plurality of anodes may be alternately arranged, and a separator may be disposed between the cathodes and the anodes. Accordingly, a lithium secondary battery according to one embodiment may comprise a plurality of cathode tabs and a plurality of anode tabs extending from each of the plurality of cathodes and the plurality of anodes.

In one embodiment, the cathode tabs (or anode tabs) may be laminated, pressed, and welded together to form a cathode tab stack (or an anode tab stack). The cathode tab stack may be electrically connected to the cathode lead 137, and the anode tab stack may be electrically connected to the anode lead 127.

In another aspect, the present disclosure provides a method for preparing an anode for a secondary battery. In one embodiment, such a method comprises a magnetic alignment process. For example, in one embodiment, the method for fabricating the anode for a secondary battery may comprise the steps of: coating an anode mixture on an anode current collector; applying a magnetic field while drying the coated anode mixture to perform magnetic alignment; and roll-pressing the magnetically aligned anode mixture to form an anode active material layer.

In some embodiments, the magnetic field strength applied in the magnetic alignment may be 3,000 G to 10,000 G.

As a non-limiting example, the magnetic field strength applied during the magnetic alignment may be adjusted to a range of 3,000 G to 10,000 G, 4,000 G to 10,000 G, or 5,000 G to 9,000 G.

In some embodiments, the moving speed of the anode current collector during drying of the anode mixture may be adjusted to a range of 5 m/s to 10 m/s.

In one embodiment, the method of manufacturing an anode for a lithium secondary battery comprises applying a first anode slurry to a current collector to form a first anode active material layer; applying a second anode slurry over the first anode active material layer to form a second anode active material layer; drying; and calendering to a target density; wherein the second anode active material layer comprises a silicon-containing active material in a greater amount than the first anode active material layer and has a greater mass loading than the first anode active material layer, wherein a ratio of the content of the first silicon-based active material particles in the total weight of the first anode active material to the sum of the contents of the first silicon-based active material particles in the total weight of the first anode active material and the second silicon-based active material particles in the total weight of the second anode active material is greater than 0 and less than or equal to 0.1.

Such a method may further comprise, during drying, subjecting the applied slurries to a magnetic field of about 1,000 to about 15,000 Gauss to influence alignment of at least one of the conductive additive and anisotropic particles. In certain embodiments, the web speed during drying is about 1 m/min to about 15 m/min, and calendering is carried out to achieve a packing density of about 1.4 g/cm³ to about 1.8 g/cm³ in the second anode active material layer. In certain embodiments, the first anode slurry comprises a lower weight percentage of silicon-containing active material than the second anode slurry, and wherein the total silicon content of the first anode active material layer is no more than about 15% of a total silicon content of the anode active material coating. In further embodiments, the method further comprises forming an electrochemical cell including the anode, a separator, an electrolyte, and a cathode comprising a lithium transition metal oxide.

### EXAMPLES

### Example 1

### (1) Fabrication of anode

A first anode slurry was prepared by adding water to a mixture including 5 parts by weight of silicon oxide (SiOₓ), 2.4 parts by weight of styrene-butadiene rubber (SBR) as a binder, 1.2 parts by weight of carboxymethyl cellulose (CMC) as a thickener and a remaining amount of an anode active material consisting of a 1:1 weight ratio mixture of natural graphite and artificial graphite. Here, each component is expressed in parts by weight based on 100 parts by weight of the total active material.

A second anode slurry was prepared by adding water to a mixture including 95 parts by weight of silicon oxide (SiOₓ), 0.1 part by weight of single-walled carbon nanotubes (SWCNTs) as a conductive material, 0.15 parts by weight of a surfactant as a conductive material dispersant, 0.6 parts by weight of SBR as a binder, 1.2 parts by weight of CMC as a thickener, and a remaining amount of an anode active material consisting of a 1:1 weight ratio mixture of natural graphite and artificial graphite. Here, each component is expressed in parts by weight based on 100 parts by weight of the total active material.

The first anode slurry prepared above was coated, dried, and roll-pressed on one surface of a copper current collector (copper foil having a thickness of 8 µm) to form a first anode active material layer having a loading amount of active material of 1.6 mg/cm² and a thickness of 9.6 µm.

The second anode slurry prepared above was coated, dried, and roll-pressed on the first anode active material layer to form a second anode active material layer having a loading amount of active material of 8.8 mg/cm² and a thickness of 54.4 µm, thereby fabricating an anode.

### (2) Manufacture of lithium secondary battery

A cathode slurry was prepared by mixing Li[Ni_{0.5}Co_{0.2}Mn_{0.3}]O₂ as the cathode active material, multi-walled carbon nanotubes (MWCNTs) as a conductive material, and polyvinylidene fluoride (PVDF) as a binder at a weight ratio of 98.08:0.72:1.2. The slurry was uniformly applied to an aluminum foil having a thickness of 12 µm and vacuum-dried to fabricate a cathode for a secondary battery. Approximately 20 wt% of the MWCNT content consisted of a CNT dispersant.

The cathode and anode were notched to a predetermined size and stacked, with a separator (polyethylene, thickness: 13 µm) interposed between the cathode and anode to form an electrode cell, and then the tab portions of the cathode and anode were welded, respectively. The assembly of the welded cathode/separator/anode was placed into a pouch, and three sides of the pouch were sealed, leaving one side open for electrolyte injection. In this case, the portion having the electrode tab was included in the sealed part.

After injecting the electrolyte through the electrolyte injection side, the remaining electrolyte injection side was also sealed, and the cell was left to be impregnated for 12 hours or more to manufacture a lithium secondary battery.

A solution, prepared by dissolving 1.1 M LiPF₆ in a mixed solvent of EC/EMC (25/75; volume ratio), and then adding 8 wt% of fluoroethylene carbonate (FEC), 0.5 wt% of 1,3-propenesultone (PRS), and 1.0 wt% of 1,3-propanesultone (PS), was used as the electrolyte.

### Example 2

An anode and a lithium secondary battery were manufactured in the same manner as in Example 1, except that the content of silicon oxide (SiOₓ) used in preparing the first anode slurry was adjusted to the value listed in Table 1 below to form the first anode active material layer had a thickness of 3.2 µm, and the content of silicon oxide (SiOₓ) used in preparing the second anode slurry was adjusted to the value listed in Table 1 below to form the second anode active material layer had a thickness of 60.8 µm, and the loading amounts of the first and second anode active material layers were set to the values shown in Table 1.

### Example 3

An anode and a lithium secondary battery were manufactured in the same manner as in Example 1, except that 5 parts by weight of silicon oxide (SiOₓ) was used in the preparation of the first anode slurry, 95 parts by weight of silicon oxide (SiOₓ) was used in the preparation of the second anode slurry, and Li[Ni_{0.85}Co_{0.1}Mn_{0.02}]O₂ was used as the cathode active material.

### Comparative Example 1

An anode and a lithium secondary battery were manufactured in the same manner as in Example 1, except that 50 parts by weight of silicon oxide (SiOₓ) were used in the preparation of the first anode slurry to form a first anode active material layer having a thickness of 16 µm, and 50 parts by weight of silicon oxide (SiOₓ) were used in the preparation of the second anode slurry to form a second anode active material layer having a thickness of 48 µm. The loading amounts of the first and second anode active material layers were set to the values shown in Table 1.

### Comparative Example 2

An anode and a lithium secondary battery were manufactured in the same manner as in Example 1, except that the content of silicon oxide (SiOx) used in preparing the first anode slurry was set to the value listed in Table 1 below, and the content of silicon oxide (SiOx) used in preparing the second anode slurry was set to the value listed in Table 1 below.

### Comparative Example 3

An anode and a lithium secondary battery were manufactured in the same manner as in Example 1, except that the content of silicon oxide (SiOx) used in preparing the first anode slurry was set to the value listed in Table 1 below to form a first anode active material layer having a thickness of 3.2 µm, and the content of silicon oxide (SiOx) used in preparing the second anode slurry was set to the value listed in Table 1 below to form a second anode active material layer having a thickness of 60.8 µm, and the loading amounts of the first and second anode active material layers were set to the values shown in Table 1.

### Comparative Example 4

An anode slurry was prepared by adding water to a mixture including 95 parts by weight of silicon oxide (SiOₓ), 0.1 part by weight of SWCNTs as a conductive material, 0.15 parts by weight of a surfactant as a conductive material dispersant, 0.6 parts by weight of SBR as a binder, and 1.2 parts by weight of CMC as a thickener.
The anode slurry was coated, dried, and roll-pressed on one surface of a copper current collector (copper foil having a thickness of 8 µm) to form an anode active material layer having a thickness of 64 µm, thereby fabricating an anode. The loading amounts of the first anode active material layer and the second anode active material layer prepared in the examples and comparative examples are shown in Table 1 below. In addition, the content of the first silicon-based active material particles in the total weight of the first anode active material used in the examples and comparative examples and the content of the second silicon-based active material particles in the total weight of the second anode active material used in the examples and comparative examples are also shown in Table 1 below, wherein a is the loading amount of first anode active material layer (mg/cm²); b is the loading amount of second anode active material layer (mg/cm²); c is the content of first silicon-based active material particles in the total weight of the first anode active material (parts by weight); and d is the content of second silicon-based active material particles in the total weight of the second anode active material (parts by weight).

**TABLE 1**

| | a | b | b/(a+b) | c | d | c/(c+d) |
|---|---|---|---|---|---|---|
| Example 1 | 1.6 | 8.8 | 0.85 | 5 | 95 | 0.05 |
| Example 2 | 0.5 | 9.9 | 0.95 | 10 | 90 | 0.1 |
| Example 3 | 1.6 | 8.8 | 0.85 | 5 | 95 | 0.05 |
| Comparative Example 1 | 2.6 | 7.8 | 0.75 | 50 | 50 | 0.5 |
| Comparative Example 2 | 1.6 | 8.8 | 0.85 | 15 | 85 | 0.15 |
| Comparative Example 3 | 0.5 | 9.9 | 0.95 | 15 | 85 | 0.15 |
| Comparative Example 4 | 0 | 10.4 | 1 | 0 | 95 | 0 |

### Reference Example: Measurement of thickness of electrode active material layer

The anodes fabricated in the examples and comparative examples were allowed to stand for 24 hours, then cut, and SEM images of the cut surfaces were taken. From the SEM images, the thicknesses of the first and second anode active material layers of each anode were measured at two points, and the average value was calculated to determine the thickness.

Table 2 below shows the thickness, density, and ratio of the anode active material layers of each example and comparative example, where the ratio was calculated as b/(a+b) for the loading amount ratio and c/(c+d) for the silicon-based active material particle content ratio between the first and second anode active material layers. The density of the first anode active material layer and the second anode active material layer was calculated by dividing the loading amount by the thickness.

**TABLE 2**

| | First anode active material layer | | Second anode active material layer | | Second anode active material layer thickness / First anode active material layer thickness | First anode active material layer density / Second anode active material layer density |
|---|---|---|---|---|---|---|
| | Thickness (µm) | Density (g/cm³) | Thickness (µm) | Density (g/cm³) | | |
| Example 1 | 9.6 | 1.66 | 54.4 | 1.62 | 5.7 | 1.02 |
| Example 2 | 3.2 | 1.56 | 60.8 | 1.63 | 19 | 0.96 |
| Example 3 | 9.6 | 1.66 | 54.4 | 1.62 | 5.7 | 1.02 |
| Comparative Example 1 | 16 | 1.63 | 48 | 1.63 | 3 | 1 |
| Comparative Example 2 | 9.6 | 1.66 | 54.4 | 1.62 | 5.7 | 1.02 |
| Comparative Example 3 | 3.2 | 1.56 | 60.8 | 1.63 | 19 | 0.96 |
| Comparative Example 4 | 0 | 0 | 64 | 1.63 | - | 0 |

Referring to Table 2 above, in certain embodiments, the thickness of the first anode active material layer was smaller than that of the second anode active material layer. Specifically, in Examples 1 and 3, the density of the first anode active material layer was greater than that of the second anode active material layer, whereas in Example 2, the density of the second anode active material layer was greater than that of the first anode active material layer.

### Experimental Example 1: Evaluation of electrode discharge output

The lithium secondary batteries of the examples and comparative examples were charged at 0.3C under CC/CV conditions (4.2 V 0.05C cut-off) at 25°C, followed by repeated 0.05C CV charging to measure the discharge capacity of the cells.

Starting from a state of charge (SOC) of 95%, the cells were discharged at 0.3C in 5% SOC increments down to SOC 5%, and the discharge output was measured at 1C for 20 seconds at each SOC interval. The output values at SOC 20% are shown in Table 3 and FIG. 4.

Referring to Table 3 and FIG. 4, it can be confirmed that the discharge output characteristics of the examples are superior to those of the comparative examples.

### Experimental Example 2: Evaluation of fast charge cycle life characteristics

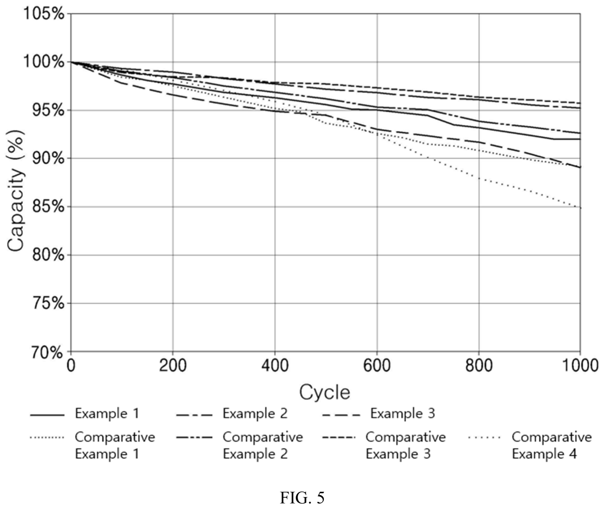

The lithium secondary battery samples of the examples and comparative examples were charged for 17 minutes at 35°C within an SOC range of 8% to 80% and discharged at 0.3C for 1,000 cycles. Thereafter, the discharge capacity retention was measured as a percentage of the initial discharge capacity. The results are shown in Table 3 and FIG. 5.

**TABLE 3**

| | Discharge output (W) | Discharge output evaluation | Discharge capacity retention (fast charge cycle) (%) | Discharge capacity retention evaluation |
|---|---|---|---|---|
| Example 1 | 312 | O | 92 | O |
| Example 2 | 316 | O | 95.2 | O |
| Example 3 | 318 | O | 89 | △ |
| Comparative Example 1 | 223 | X | 89.1 | △ |
| Comparative Example 2 | 268 | X | 92.6 | O |
| Comparative Example 3 | 276 | X | 95.8 | O |
| Comparative Example 4 | 189 | X | 84.9 | X |

Evaluation criteria for discharge output:
O: Discharge output ≥ 300 W
X: Discharge output < 300 W

Evaluation criteria for discharge capacity retention
O: Discharge capacity retention (fast charge cycle) ≥ 90%
△: Discharge capacity retention (fast charge cycle) ≥ 85% and < 90%
X: Discharge capacity retention (fast charge cycle) < 85%

Referring to Table 3 above, the examples demonstrated significantly superior discharge output compared to the comparative examples. Specifically, the examples exhibited discharge outputs of 300 W or more, which were superior to those of the comparative examples showing discharge outputs less than 300 W. In particular, Example 3 exhibited remarkably higher discharge output than the comparative examples. Furthermore, the examples exhibited superior discharge output while also showing improved discharge capacity retention and fast charge characteristics compared to the comparative examples. The examples demonstrated excellent performance, with discharge capacity retention (fast charge cycle) of 89% or more. Examples 1 and 2, employing mid-Ni (with a Ni molar fraction of 0.55), exhibited improved fast charge cycle life characteristics compared to Example 3, which employed high-Ni (with a Ni molar fraction of 0.85).

### Experimental Example 3: Measurement and evaluation of load value according to cutting depth

For the anodes fabricated in Example 2 and Comparative Example 1, the load values corresponding to each cutting depth of the anode active material layer were measured three times using a cutting device, SAICAS (Surface and Interfacial Cutting Analysis System), and the standard deviations thereof were calculated.

The SAICAS was positioned above the anode active material layer, and a blade included in the SAICAS was positioned in contact with the surface of the anode active material layer.

The blade speed was set to a vertical speed of 0.5 µm/s and a horizontal speed of 5 µm/s, and the cutting inclination (0) was approximately 5.7 degrees. The cutting depth (H_{C}), defined as the depth of the oblique cutting from the surface of the anode active material layer, was set to the values shown in Table 4 below, and the anode active material layer was obliquely cut accordingly.

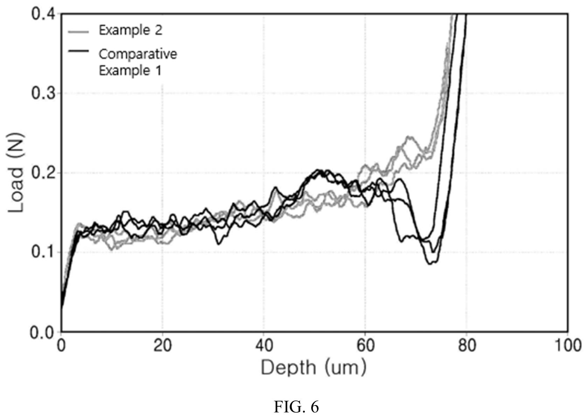

During this process, load data were obtained as shown in FIG. 6. FIG. 6 illustrates the vertical load values according to the cutting depth. The load value represents the vertical force (N) applied to the blade, and the corresponding values are listed in Table 4 below.

**TABLE 4**

| | Cutting depth (H_{c}) (µm) | Load value (N) |
|---|---|---|
| Example 2 | 70-75 | 0.2-0.25 |
| Comparative Example 1 | 60-75 | 0.08-0.19 |

Referring to Table 4, Example 2 satisfied the value of b/(a+b) in Table 1 as 0.95, thereby exhibiting a higher load value compared to Comparative Example 1, in which the value of b/(a+b) in Table 1 was 0.75.

### Description of Reference Numerals

100: Electrode assembly
110: Electrode
117: Electrode lead
120: Anode
121: First anode active material layer
122: Second anode active material layer
125: Anode current collector
126: Anode tab
127: Anode lead
130: Cathode
131: Cathode active material layer
135: Cathode current collector
136: Cathode tab
137: Cathode lead
140: Separator
200: Case

The invention is also defined by the following aspects:
Aspect 1. An anode for a secondary battery comprising: an anode current collector; and an anode active material coating comprising: a first anode active material layer disposed on the anode current collector and comprising a first anode active material, and a second anode active material layer disposed on the first anode active material layer and comprising a second anode active material,
   wherein the first anode active material comprises first silicon-based active material particles, the second anode active material comprises second silicon-based active material particles, wherein the second anode active material layer comprises a silicon-containing active material in a greater amount than the first anode active material layer, wherein a ratio of the content of the first silicon-based active material particles in the total weight of the first anode active material to the sum of the contents of the first silicon-based active material particles in the total weight of the first anode active material and the second silicon-based active material particles in the total weight of the second anode active material is greater than 0 and less than or equal to 0.1 and
   wherein a mass loading of the second anode active material layer is greater than a mass loading of the first anode active material layer.
Aspect 2. The anode according to aspect 1, wherein the first anode active material layer comprises no more than about 25% of a total silicon content of the anode active material coating.
Aspect 3. The anode according to aspect 1 or 2, wherein a ratio of the loading amount of the second anode active material layer to the total amount of active material in both layers is 0.8 or more and less than 1.
Aspect 4. The anode according to any one of aspects 1 to 3, wherein the silicon-containing active material comprises composite particles, wherein the particles comprise a carbonaceous core, a silicon- or silicon-oxide-containing shell, and optionally an amorphous carbon outer layer.
Aspect 5. The anode for a secondary battery according to any one of aspects 1 to 4, wherein the loading amount of the first anode active material layer is 2.3 mg/cm² or less.
Aspect 6. The anode for a secondary battery according to any one of aspects 1 to 5, wherein the content of the first silicon-based active material particles from the first anode relative to the total silicon-based particles from both the first and second anodes is 1 to 10 parts by weight.
Aspect 7. The anode according to any one of aspects 1 to 6, wherein at least one of the first anode active material layer and the second anode active material layer further comprise a binder comprising at least one of polyvinylidene fluoride (PVDF), vinylidene fluoride-hexafluoropropylene copolymer (PVDF-co-HFP), polyacrylonitrile, polymethylmethacrylate, and styrene-butadiene rubber (SBR)
Aspect 8. The anode according to any one of aspects 1 to 7, wherein the silicon-based active material comprises at least one of: silicon, silicon oxide SiOx (wherein 0 < x < 2) ), silicon-carbon composite, doped silicon, and doped SiOₓ, where the dopant comprises at least one of B, P, N, Al, Mg, Ca, Zn, Cu, Mn, and Li.
Aspect 9. The anode according to any one of aspects 1 to 8, wherein the first anode active material layer has a thickness of about 1 µm to about 10 µm and/or wherein the second anode active material layer has a thickness of about 50 µm to about 65 µm.
Aspect 10. The anode according to any one of aspects 1 to 9, wherein a ratio of the thickness of the second anode active material layer to the thickness of the first anode active material layer is about 3:1 to about 20:1.
Aspect 11. The anode according to any one of aspects 1 to 10, wherein a ratio of the density of the first anode active material layer to the density of the second anode active material layer is about 0.5 to about 1.5.
Aspect 12. The anode according to any one of aspects 1 to 11, wherein the anode active material coating comprises three or more layers that collectively define a through-thickness gradient in silicon-containing active material content that increases with distance from the current collector.
Aspect 13. A lithium secondary battery comprising the anode according to any one of aspects 1 to 12 and a cathode disposed opposite the anode, optionally wherein the lithium secondary battery operates at a voltage of 4.3 V or more.
Aspect 14. A method of manufacturing an anode for a lithium secondary battery, the method comprising: applying a first anode slurry to a current collector to form a first anode active material layer; applying a second anode slurry over the first anode active material layer to form a second anode active material layer; drying; and calendering to a target density; wherein the second anode active material layer comprises a silicon-containing active material in a greater amount than the first anode active material layer and has a greater mass loading than the first anode active material layer, wherein a ratio of the content of the first silicon-based active material particles in the total weight of the first anode active material to the sum of the contents of the first silicon-based active material particles in the total weight of the first anode active material and the second silicon-based active material particles in the total weight of the second anode active material is greater than 0 and less than or equal to 0.1.Aspect 15. The method according to aspect 14, further comprising, during drying, subjecting the applied slurries to a magnetic field of about 1,000 to about 15,000 Gauss to influence alignment of at least one of the conductive additive and anisotropic particles.

## Claims

1. An anode for a secondary battery comprising:
an anode current collector; and
an anode active material coating comprising:
a first anode active material layer disposed on the anode current collector and comprising a first anode active material, and
a second anode active material layer disposed on the first anode active material layer and comprising a second anode active material,
wherein the first anode active material comprises first silicon-based active material particles, the second anode active material comprises second silicon-based active material particles, wherein the second anode active material layer comprises a silicon-containing active material in a greater amount than the first anode active material layer, and
wherein a mass loading of the second anode active material layer is greater than a mass loading of the first anode active material layer.

2. The anode according to claim 1, wherein the first anode active material layer comprises no more than about 25% of a total silicon content of the anode active material coating.

3. The anode according to claim 1 or 2, wherein a ratio of the loading amount of the second anode active material layer to the total amount of active material in both layers is 0.8 or more and less than 1.

4. The anode according to any one of claims 1 to 3, wherein the silicon-containing active material comprises composite particles, wherein the particles comprise a carbonaceous core, a silicon- or silicon-oxide-containing shell, and optionally an amorphous carbon outer layer.

5. The anode for a secondary battery according to any one of claims 1 to 4, wherein the loading amount of the first anode active material layer is 2.3 mg/cm² or less.

6. The anode for a secondary battery according to any one of claims 1 to 5, wherein the content of the first silicon-based active material particles from the first anode relative to the total silicon-based particles from both the first and second anodes is 1 to 10 parts by weight.

7. The anode according to any one of claims 1 to 6, wherein at least one of the first anode active material layer and the second anode active material layer further comprise a binder comprising at least one of polyvinylidene fluoride (PVDF), vinylidene fluoride-hexafluoropropylene copolymer (PVDF-co-HFP), polyacrylonitrile, polymethylmethacrylate, and styrene-butadiene rubber (SBR).

8. The anode according to any one of claims 1 to 7, wherein the silicon-based active material comprises at least one of: silicon, silicon oxide SiOx (wherein 0 < x < 2) ), silicon-carbon composite, doped silicon, and doped SiOₓ, where the dopant comprises at least one of B, P, N, Al, Mg, Ca, Zn, Cu, Mn, and Li.

9. The anode according to any one of claims 1 to 8, wherein the first anode active material layer has a thickness of about 1 µm to about 10 µm and/or wherein the second anode active material layer has a thickness of about 50 µm to about 65 µm.

10. The anode according to any one of claims 1 to 9, wherein a ratio of the thickness of the second anode active material layer to the thickness of the first anode active material layer is about 3:1 to about 20:1.

11. The anode according to any one of claims 1 to 10, wherein a ratio of the density of the first anode active material layer to the density of the second anode active material layer is about 0.5 to about 1.5.

12. The anode according to any one of claims 1 to 11, wherein the anode active material coating comprises three or more layers that collectively define a through-thickness gradient in silicon-containing active material content that increases with distance from the current collector.

13. A lithium secondary battery comprising the anode according to any one of claims 1 to 12 and a cathode disposed opposite the anode, optionally wherein the lithium secondary battery operates at a voltage of 4.3 V or more.

14. A method of manufacturing an anode for a lithium secondary battery, the method comprising:
applying a first anode slurry to a current collector to form a first anode active material layer;
applying a second anode slurry over the first anode active material layer to form a second anode active material layer; drying; and
calendering to a target density;
wherein the second anode active material layer comprises a silicon-containing active material in a greater amount than the first anode active material layer and has a greater mass loading than the first anode active material layer, wherein a ratio of the content of the first silicon-based active material particles in the total weight of the first anode active material to the sum of the contents of the first silicon-based active material particles in the total weight of the first anode active material and the second silicon-based active material particles in the total weight of the second anode active material is greater than 0 and less than or equal to 0.1.

15. The method according to claim 14, further comprising, during drying, subjecting the applied slurries to a magnetic field of about 1,000 to about 15,000 Gauss to influence alignment of at least one of the conductive additive and anisotropic particles.
